# EUROPEAN PATENT APPLICATION

(11) **EP 1 604 717 A1**
(43) Date of publication of application: **14.12.2005**
(21) Application number: 04719045.9
(22) Date of filing: 10.03.2004
(51) Int. Cl.: B01D 39/16

(54) **NONWOVEN FABRIC AIR FILTER FOR INTERNAL COMBUSTION ENGINE**

(30) Priority: 20.03.2003 JP 2003076916
(71) Applicant: Ambic Co., Ltd., Himeji-shi, Hyogo 670-0841 (JP); Kinsei Seishi Co., Ltd., Kochi-shi, Kochi 780-0921 (JP)
(72) Inventor: FUJIWARA, Kazumaro, AMBIC CO., LTD., Himeji-shi, Hyogo 6700841 (JP); UESAKA, Shigemi, AMBIC CO., LTD., Himeji-shi, Hyogo 6700841 (JP); NISHIGAWA, Shoji, KINSEI SEISHI CO., LTD., Kochi-shi, Kochi 7800921 (JP); YAMAZAKI, Yasuyuki, KINSEI SEISHI CO., LTD., Kochi-shi, Kochi 7800921 (JP)
(74) Representative: Henkel, Feiler & Hänzel
(86) International application number: PCT/JP2004/003070
(87) International publication number: WO 2004/082805

(57) **Abstract**

A thin and uniform nonwoven fabric air filter for an internal combustion engine with a pleated form which comprises an air-laid nonwoven fabric obtained by forming a plurality of layers mainly composed of polyester-based binder fibers having a fiber length of 1 to 10 mm by an air-laid nonwoven fabric production process and performing heat adhesion, wherein an upper layer side (fluid inflow side) comprises large fibers, a lower layer side (fluid outflow side) comprises fine fibers, a final fluid outflow side comprises 100% of the polyester-based binder fibers, the basis weight (METSUKE) is from 100 to 350 g/m², the apparent density is from 0.04 g/cm³ to 0.3 g/cm³, and the dry-heat shrinkage factor after 300 hours at 100°C is 3% or less. The air filter induces no environmental pollution, is high in dust collection efficiency, and has long life.

## Description

### Technical Field

The present invention relates to a filter material for filtering solid matter, which is composed of a nonwoven fabric. More particularly, the present invention relates to a nonwoven fabric air filter material which is used in an engine intake air filter used in an internal combustion engine of an automobile or the like.

In general, a nonwoven fabric air filter material for an internal combustion engine requires strength at the time of use. Accordingly, relatively long fibers (for example, having a fiber length of 30 mm to 105 mm) are used, and as a method of interfiber bonding, there has been known a method of mechanically imparting fiber entanglement by needle punching or water jetting, a method of bonding fibers with a chemical adhesive such as a synthetic resin, a method of blending binder fibers and performing heat adhesion, or the like.

The present invention relates to a filter material having a structure in which a plurality of layers of short polyester-based binder fibers alone and/or blended fibers of the binder fibers and other fibers are laminated by an air-laid nonwoven fabric production process and adhered by heat.

### Background Art

As nonwoven fabric air filters used in automobiles and the like, there are generally used ones to which a pleated form is imparted, and moreover, the apparent density of the filters is low.

In order to retain the pleated form, an air filter reinforced with a resin (patent document 1: JP-UM-B-57-31938), an air filter using binder fibers (patent document 2: JP-A-10-180023) and the like are disclosed.

Further, there is also a description for air filter application of an air-laid process staple fiber nonwoven fabric having a specified air permeability ratio and a density gradient in the thickness direction thereof (patent document 3: JP-A-11-81116).

Furthermore, a pleated filter having a density gradient (patent document 4: JP-A-11-90135) and the like are laid open.

In patent document 1, a plurality of fiber layers are integrated by needling, and then, subjected to resin finishing, thereby intending to retain a form. However, there are the problem of environmental pollution caused by a resin and a solvent in finishing and the disadvantage that a great deal of heat energy is required for drying of a wet nonwoven fabric. Further, also in terms of filter performance, the resin adhered does not contribute to collection efficiency, and has the disadvantage of only increasing pressure loss.

In patent document 2, no resin is used, and the binder fibers are blended to use. Accordingly, environmental pollution and energy loss are low. However, respective layers are entangled and integrated by using needles, so that the filter has the disadvantage that dust passes through needle traces to decrease the collection efficiency of the filter.

Further, in patent document 3, there is a description with respect to an air-laid nonwoven fabric having a density gradient in the thickness direction thereof. However, the main applications thereof are for absorbent goods such as a paper diaper, a sanitary napkin, an incontinent pad and a wiper. In the text, there is a description that the nonwoven fabric can be used also for filter application. However, specific technical contents suitable for a filter and the operation and effect thereof are unmentioned at all, and not suggested in any way.

Furthermore, although patent document 4 relates to a pleated filter to which a fiber diameter gradient is imparted, the fiber diameter ratio of inside to outside is specified to 2 to 20 (when represented by the ratio of fluid outflow side fiber diameter/fluid inflow side fiber diameter, it becomes 0.05 to 0.5). In the case of an automobile air cleaner intended by the present invention, the filter is inapplicable to fine carbon particles to be filtered because of its insufficient performance. Moreover, there is no description with respect to an air-laid nonwoven fabric at all.

The present invention has been made in view of the problems difficult to be solved by the above-mentioned conventional art, and an object thereof is to provide a thin, light nonwoven fabric air filter for an internal combustion engine which induces no environmental pollution in the production thereof, has no needle traces, has increased uniformity, is high in dust collection efficiency, and has long life.

### Disclosure of the Invention

The present invention relates to a nonwoven fabric air filter for an internal combustion engine (hereinafter also referred to as an "air filter") with a pleated form which comprises an air-laid nonwoven fabric obtained by forming a plurality of layers mainly composed of polyester-based binder fibers having a fiber length of 1 to 10 mm by an air-laid nonwoven fabric production process and performing heat adhesion, wherein an upper layer side (fluid inflow side) comprises large fibers, a lower layer side (fluid outflow side) comprises fine fibers, a final fluid outflow side comprises 100% of the polyester-based binder fibers, the basis weight (METSUKE) is from 100 to 350 g/m², the apparent density is from 0.04 g/cm³ to 0.3 g/cm³, and the dry-heat shrinkage factor after 300 hours at 100°C is 3% or less.

For example, in the case of a three-layer structure, it is preferred that the air filter of the present invention has a fiber diameter of 20 to 45 µm and a basis weight of 10 to 75 g/m² in the large-fiber layer on the upper layer side, a fiber diameter of 15 to 30 µm and a basis weight of 20 to 105 g/m² in an intermediate layer, and a fiber diameter of 7 to 20 µm and a basis weight of 70 to 170 g/m² in the fine-fiber layer on the lower layer side (that is to say, the final fluid outflow side).

Further, in a four-layer structure, it is preferred that the air filter has a fiber diameter of 25 to 50 µm and a basis weight of 5 to 50 g/m² in the large-fiber layer on the upper layer side, a fiber diameter of 20 to 35 µm and a basis weight of 15 to 70 g/m² in the intermediate layer, a fiber diameter of 15 to 25 µm and a basis weight of 30 to 90 g/m² in a fine-fiber layer on a lower layer side, and a fiber diameter of 7 to 20 µm and a basis weight of 50 to 140 g/m² in the finest-fiber layer of the lowest layer (that is to say, the final fluid outflow side).

Each layer may be a blending of fibers different in diameter within the range in which the operation and effect of the present invention are not inhibited.

Further, the air filter of the present invention is preferably one having water repellency.

Furthermore, in the layers other than the lowest layer, fibers other than the polyester-based binder fibers may be blended within the range in which the operation and effect intended by the present invention is not inhibited.

In addition, the air filter of the present invention may be one obtained by compounding with another air-permeable sheet.

### Brief Description of the Drawings

Fig. 1 is a graph showing the relationship between the void volume index and DHC in an air filter.
Fig. 2 is a photomicrograph (magnification: 25) manufactured by Sonic Co., Ltd., which shows an entering state of dust after a DHC test in an air filter of Example 3.
Fig. 3 is a photomicrograph (magnification: 25) manufactured by Sonic Co., Ltd., which shows an entering state of dust after a DHC test in an air filter of Example 4.
Fig. 4 is a photomicrograph (magnification: 25) manufactured by Sonic Co., Ltd., which shows an entering state of dust after a DHC test in an air filter of Comparative Example 3.

### Best Mode for Carrying Out the Invention

The air filter of the present invention is formed by an air-laid nonwoven fabric production process. That is to say, short fibers mainly composed of polyester-based binder fibers having a fiber length of 1 to 10 mm are blasted from a single blast portion or multiple blast portions positioned over a porous net conveyer to form fiber layers on the net conveyer while sucking with an air suction portion arranged under the net conveyer.

At this time, the fiber layers are sequentially laminated so that large-fiber to fine-fiber layers are disposed from an upper layer side (fluid inflow side) to a lower layer side (fluid outflow side). This laminated fiber layers are brought in a heat oven, and the fibers are bonded by hot air to perform integration as a nonwoven fabric.

The nonwoven fabric is finished to a specified density and thickness according to the amount of fibers, blast conditions, air suction conditions, hot air conditions and the like, there by being able to obtain the air filter of the present invention. The temperature at the time when heat adhesion is performed in the heat oven is usually from 120 to 200°C, and more preferably from 130 to 180°C, although it is appropriately selected according to the kind of polyester-based binder fibers used or the basis weight of the whole.

In the case of a general dry-process nonwoven fabric production process which has hitherto been known, that is to say, such as a carding process of short fibers or a spun-bonding process of continuous filaments, layer-constituting fibers are arrayed approximately in a sheet form, and it is difficult to array the fibers in the thickness direction.

Accordingly, when the nonwoven fabric is used in the filter intended by the present invention, it has the disadvantage of high pressure loss. Addition of a mechanical fiber entangling process such as needle punching or spunlacing can rearray the fibers relatively in the thickness direction. However, through holes caused by needles or water streaks of spunlacing remain, resulting in lack of an action of trapping fine dust.

In contrast, the air filter of the present invention is produced by the air-laid nonwoven fabric production process using short fibers, so that the fibers are easily arrayed in the thickness direction, and blending of the fibers different in fiber diameter occurs between the layers. As a result, a fiber diameter gradient between the fiber layers becomes a relatively continuous inclination.

Accordingly, the air filter is significantly characterized by low pressure loss, a prolonged life (a period of time for which filtration is possible) because of decreased clogging due to dust, and moreover, a decreased increase in pressure loss. Further, according to such an air-laid nonwoven fabric production process using the short fibers as raw material fibers, it is significantly characterized by that the filter extremely good in formation, that is to say, good in uniformity, is obtained. The uniformity is extremely important in applications of the air filter intended by the present invention, and difficult to be obtained in the above-mentioned existing dry-process nonwoven fabrics. Furthermore, needles are not used, so that the problem of a reduction in performance caused by needle traces is also dissolved. In addition, no use of a chemical binder causes no harmful effects such as an increase in pressure loss and a decrease in collection efficiency due to film formation, and raises no fear of environmental pollution.

The fibers used in the present invention have a fiber length of 1 to 10 mm. The use of fibers having a fiber length exceeding 10 mm is unfavorable, because not only it is difficult to obtain uniformity as the nonwoven fabric, but also productivity is decreased. On the other hand, less than 1 mm is unfavorable, because not only a decrease in strength of the nonwoven fabric occurs, but also dropout of fibers becomes liable to occur. The fiber length is preferably from 2 to 7 mm, and more preferably from 3 to 5 mm.

The fibers mainly constituting the filter material of the present invention are polyester-based fibers excellent in characteristics such as chemical resistance, heat resistance, durability, strength and hardness, and particularly, ones mainly composed of heat-adhesive conjugated polyester-based fibers are suitable.

As the heat-adhesive conjugated polyester-based fibers, core/sheath type or side-by-side type conjugated fibers are suitable. In this case, as a polymer constituting a core component or an inner layer portion of the fiber, a polymer having a higher melting point than a sheath component and not deteriorated at a heat-adhesive treatment temperature is preferred. Such polymers include polyalkylene arylates mainly composed of aliphatic diol units and aromatic dicarboxylic acid units. For example, they are polyethylene terephthalate, polybutylene terephthalate, polypropylene terephthalate, polyethylene naphthalate and the like. They may be used either alone or as a combination of two or more of them, and may contain a copolymerizable component as needed. Further, they may be modified within the range in which the operation and effect of the present invention are not inhibited.

As a polymer constituting a sheath or a peripheral portion of the fiber as a heat-adhesive component, there is used a polymer having a lower melting point than the polymer constituting the above-mentioned core component or inner layer portion of the fiber. Examples thereof include but are not limited to one in which a copolymerizable component, for example, a diol such as diethylene glycol or a dicarboxylic acid such as isophthalic acid, is allowed to be contained in the component constituting the above-mentioned core or inner layer portion of the fiber, a polyester-based elastomer in which a poly(alkylene oxide) glycol such as tetramethylene glycol or the like is copolymerized as a soft segment, and the like. These polymers may be further modified within the range in which the operation and effect of the present invention are not inhibited. The melting point is required to be 110°C or higher. Less than 110°C causes problems with regard to heat dimensional stability, heat deformation resistance and the like as an automotive air filter.

In order to impart various functions as needed, the filter material of the present invention may contain other fibers, in addition to the above-mentioned polyester binder fiber. They include, for example, cellulosic fibers such as wood pulp and rayon, synthetic fibers such as a polyester, a polyamide, an aromatic polyamide, polyvinyl alcohol, polyvinyl chloride, polyacrylonitrile and polyphenylene sulfide, inorganic fibers such as glass fiber, carbon fiber, ceramic fiber and metal fiber, biodegradable fibers such as polylactic acid, and the like. In this case, the blending ratio is preferably less than 60% by weight, and more preferably 25% by weight or less. In the case of 60% by weight or more, dropout of blended fibers occurs, strength decreases, heat resistance decreases, or pleating processability decreases. This is therefore unfavorable.

When fibers having a higher melting point than the polyester binder fibers or fibers having no melting point are blended, heat resistance increases to bring about the advantage of being difficult to be thermally deteriorated. This is therefore preferred.

Further, other low-melting binder fibers may be contained within the range in which the operation and effect of the present invention are not inhibited. They include, for example, polyolefinic fibers such as polyethylene and polypropylene, conjugated fibers thereof, copolymerizable component-containing fibers thereof, and the like. In this case, the blending ratio is preferably 15% by weight or less, and more preferably 10% by weight or less. Exceeding 15% by weight is unfavorable, because influence appears in heat dimensional stability and heat deformation resistance.

Further, the fibers constituting the respective layers may be the same or different.

Furthermore, fibers or materials having effects such as odor eliminating, antibacterial, mildewproof, water-repellent, flame-retardant and coloring effects may be contained.

It is necessary that the final fluid outflow side, for example, the lower layer side of the three-layer structure or the lowest layer side of the four-layer structure, is composed of 100% of the polyester-based binder fibers. When the other fibers are blended in the final fluid outflow side, dropout of the fibers becomes liable to occur, which causes engine trouble due to the fibers sucked in the inside of an engine. This is therefore unsuitable. Although binder fibers other than the polyester fibers are conceivable, the polyester-based binder fibers are preferred from the viewpoints of cost, heat resistance, rigidity, pleating processability and the like.

Non-binder fibers can be blended in a layer other than the final fluid outflow side. In this case, the void volume increases to slow down the clogging rate of dust, thereby providing a long-life automotive air filter. When the fibers to be blended are not less than 60% by weight, adhesiveness with the binder fibers is deteriorated to cause the problems of dropout of the fibers and pleating processability.

As the fibers used in the present invention, it is also possible to use recycled fibers.

From the viewpoints of environmental pollution caused by throwaway and reuse of global effective resources, it is also possible to use PET bottle recycled fibers. They include recycled fibers obtained by a known means such as material recycling or chemical recycling.

Further, the air filter according to the present invention contains the polyester-based fibers as a main constituent, so that it has recycling efficiency.

The basis weight of the air filter of the present invention is from 100 to 350 g/m², preferably from 150 to 300 g/m², and more preferably from 180 to 250 g/m².

When the basis weight is less than 100 g/m², retention of dust decreases, and the life becomes short. Further, leakage of dust increases, and an engine is impeded, because of insufficient performance.

On the other hand, exceeding 350 g/m² results in not only an increase in pressure loss, but also an increase in thickness. Accordingly, the practical problem arises that a large pleating area can not be taken in a definite installing area. Further, it is unfavorable because it results in an increase in cost.

The apparent density of the filter of the present invention is from 0.04 to 0.3 g/cm³, preferably from 0.05 to 0.2 g/cm³, and more preferably from 0.06 to 0.15 g/cm³.

The filter of the present invention is of an internal filtration system in which dust is collected in the inside of a layer, not of a surface filtration system in which a repeating cycle of filtration → washing → filtration is possible. The filter of the internal filtration system is applied to an automotive air filter and the like at present, and after the use for a definite period or after pressure loss has become high, the filter is replaced. Accordingly, a structure low in pressure loss and high in efficiency is desired. In order to obtain low pressure loss, the apparent density of the filter is required to be 0.3 g/cm³ or less. Exceeding 0.3 g/cm³ results in increased pressure loss, and when used in a filter material of an automobile or the like, the amount of air for combustion of engine fuel is insufficient, falling into imperfect combustion or an engine stop. This is therefore unfavorable. On the other hand, less than 0.04 g/cm³ results in difficulty of pleating processability or form retention because of excessive bulkiness, which is liable to cause engine trouble by blowing-through of dust, or the like.

The apparent density means the basis weight of the air filter divided by the thickness thereof.

Further, factors given to filter characteristics other than the apparent density include the void volume index. The void volume index is a factor which represents a volume occupied by voids in a definite installing area of the filter material. Space for retaining dust increases and the life is prolonged, as this void volume index becomes high. However, as demerits, not only the collection efficiency for dust decreases, but also the thickness becomes too thick or the rigidity is too low, so that contact of adjacent pleats with each other becomes liable to occur after pleating. The void volume index is preferably from 1.0 to 4.0. Less than 1.0 results in low DHC or short life, whereas exceeding 4.0 results in failure to take a large filtration area as a pleated product.

Further, for the filter material for an internal combustion engine, the temperature thereof becomes higher than ordinary temperature, so that the dry-heat shrinkage factor after 300 hours at 100°C is required to be 3% or less, preferably 2% or less, and more preferably 1.5% or less. When the shrinkage factor exceeds 3%, deformation of pleats becomes liable to occur. It is therefore practically unusable as the filter material for an internal combustion engine.

The nonwoven fabric air filter of the present invention has a pleated form.

In general, in order to increase a filter area in a restricted space, the pleated form is used as the filter form, because a large filtration area can be secured in a definite installing area, and pressure loss decreases. Accordingly, the form of pleats may be any, as long as such functions can be exhibited.

In order to perform pleating, hardness is necessary, and the present inventors have variously tested the relationship between hardness and pleat formability. As a result, it has become clear that a bending resistance of less than 0.3 mN is unsuitable as the air filter for an internal combustion engine, because pleats deform when dust adheres to increase pressure loss, or adjacent pleats come into contact with each other. On the other hand, when it exceeds 20 mN, the filter possibly tears or cracks in pleating. This is therefore unfavorable. Accordingly, the Gurley bending resistance of the nonwoven fabric of the present invention is usually from 0.3 to 20 mN, and preferably from 0.5 to 10 mN.

The Gurley bending resistance as used herein represents the bending resistance according to the Gurley process specified in JIS L1096-1999, 8. 20. 1.

Further, in order to impart this hardness, an air-permeable sheet having a Gurley bending resistance of 0.3 mN or more which is higher in air permeability than the above-mentioned nonwoven air filter material of the present invention may be laminated on the outside of the lower layer (outflow side). Examples of such sheets include a dry-process nonwoven fabric, a spun bond nonwoven fabric, a plastic net, a woven fabric and the like.

The fluid flow direction of the air filter having a fiber diameter gradient of the present invention is from a rough layer (large diameter fiber side), different from surface filtration, and it is necessary to trap matter to be filtered such as dust having distribution in particle size, on respective fiber surfaces of the respective layers in a well-balanced manner. As a result of various combination tests, in the case of the three-layer structure, it has become clear that uncombusted carbon particles of 1 µm or less can also be efficiently filtered and that the long-life nonwoven fabric air filter for an internal combustion engine is obtained, when the structure is a combined structure in which the large-fiber layer on the upper layer side has a diameter of 20 to 45 µm, preferably 20 to 35 µm, and a basis weight of 10 to 75 g/m², preferably 10 to 50 g/m², the fiber layer of the intermediate layer has a diameter of 13 to 25 µm, preferably 20 to 30 µm, and a basis weight of 20 to 105 g/m², preferably 40 to 80 g/m², and the fiber layer on the lower layer side has a diameter of 7 to 20 µm, preferably 10 to 20 µm, and a basis weight of 70 to 170 g/m², preferably 80 to 120 g/m².

For example, more particularly, taking the three-layer structure as an example, the operation and effect of the fiber layer of the upper layer is an object of a pre-fil ter for trapping large particles of about 10 µm or more. When the layer is constituted by fibers of less than 20 µm, even small particles of less than 10 µm adhere to a surface thereof to accelerate clogging. Accordingly, the life becomes short.

On the other hand, when fibers exceeding 45 µm are used, large particles of 10 µm or more enter the inside of the filter, and similarly, the life becomes short. The same is true for the basis weight, and less than 10 g/m² results in short life because of entering of dust, whereas exceeding 75 g/m² results in increased thickness of the filter to cause the problem of impeding the pleated form.

The intermediate layer has the operation and effect of the layer for trapping the particles of about 5 to 10 µm which have passed through the upper layer. When the diameter of the fibers is less than 15 µm, even small particles of less than 5 µm adhere to a surface thereof to accelerate clogging. Accordingly, the life becomes short. On the other hand, when fibers exceeding 30 µm are used, particles of 5 to 10 µm enter the lower layer having a fiber diameter of 7 to 20 µm, and similarly, the life becomes short. The same is true for the basis weight, and less than 20 g/m² results in short life because of entering of dust, whereas exceeding 105 g/m² results in increased thickness of the filter to cause the problem of impeding the pleated form.

As for the operation and effect of the lower layer (that is to say, the lowest layer), in order to increase the collection efficiency and retain the pleated form, the diameter of the fibers used is from 7 to 20 µm the basis weight of the fibers is preferably from 70 to 170 g/m². The fibers of less than 7 µm are unfavorable because they have a problem in regard to pleat retention properties. On the other hand, exceeding 20 µm unfavorably results in poor collection efficiency. Further, similarly, when the basis weight is less than 70 g/m², pleats are unfavorably deformed at the time of use. On the other hand, exceeding 170 g/m² unfavorably results in increased pressure loss to decrease the life, although the hardness is maintained.

Further, the four-layer structure may be used. In this case, a combination is preferred in which the large-fiber layer on the upper layer side has a diameter of 25 to 50 µm, preferably 30 to 45 µm, and a basis weight of 5 to 50 g/m², preferably 10 to 40 g/m², the intermediate layer has a diameter of 20 to 35 µm, preferably 25 to 30 µm, and a basis weight of 15 to 70 g/m², preferably 20 to 55 g/m², the fine-fiber layer on the lower layer side has a diameter of 15 to 25 µm, preferably 15 to 20 µm, and a basis weight of 30 to 90 g/m², preferably 20 to 60 g/m², and the finest fiber-layer on the lowest layer side has a diameter of 7 to 20 µm, preferably 10 to 15 µm, and a basis weight of 50 to 140 g/m², preferably 60 to 120 g/m².

Furthermore, as a result of various tests, it has become clear that when the fiber diameter ratio of the respective layers, that is to say, the fiber diameter ratio of fluid outflow side fiber layer/fluid inflow side fiber layer, is from 0.5 to 0.95, even carbon particles of 1 µm or less can be efficiently collected and the life is also long. Exceeding 0.95 results in no difference between the layers to come close to a single layer, which runs counter to the spirit of the present invention. On the other hand, in the case of less than 0.5, many of fine particles are not collected in the upper layer and enter the lower layer, so that the life becomes short.

The fiber diameter ratio of the respective layers can be appropriately selected in conformity with a situation to which the air filter is applied, according to the size of particles intended to be collected, and the like.

In order to allow the polyester-based binder fibers constituting the air filter of the present invention to sufficiently exhibit its adhesive effect, heat treatment is preferably conducted at a heat adhesive temperature 5 to 40°C higher than the melting point of the adhesive component of the polyester-based binder fiber or the fusible temperature thereof. Less than 5°C results in poor adhesion, whereas exceeding 40°C results in failure to obtain a uniform nonwoven fabric by fiber shrinkage or half melting. The temperature is usually from 120 to 200°C, and preferably from 130 to 180°C, but it can be appropriately selected depending on the melting point of the polymer of the adhesive component.

Further application of calendering can also adjust the thickness or density of the resulting nonwoven fabric. In the calendering, a method is preferred in which the clearance between a pair of heat rollers is adjusted to process the nonwoven fabric to a desired thickness. In this case, the clearance is from 0.5 to 4 mm, and more preferably from 0.8 to 3.0 mm. It is preferred that the temperature is set to a temperature 50 to 110°C lower than the melting point of the adhesive component of the polyester-based binder fiber or the fusible temperature thereof. In the case of less than 50°C, the temperature comes close to the melting point, so that the surface fibers start to deform, and a film becomes liable to be formed, whereby an increase in pressure loss or deterioration in collection performance occurs. On the other hand, in the case exceeding 110°C, calendering effect becomes difficult to be exhibited. When the nonwoven fabric has been previously pre-heated, processing at low temperature is also possible.

A surface of the calender roller may be either flat or uneven.

For these conditions, conditions suitable for processing to a desired thickness and density can be appropriately selected within the range in which the operation and effect of the present invention are not inhibited.

Further, in order to make the collection efficiency more perfect as the air filter of the present invention, two or more filter materials of the present invention can also be laminated and integrated to use.

Granting that dust escapes from the first filter material (a fiber diameter gradient structure composed of two or more layers), it is expected that the dust be further collected at the second filter material (the fiber diameter gradient structure composed of two or more layers). Moreover, the filter materials become hard as a whole, which also provides the advantage that pleating becomes easier. In order to make more efficient an operation for laminating and integrating the two or more filter materials, the layer structure of two or more layers may be formed all at once, when the respective layers are previously sequentially formed by the air-laid nonwoven fabric production process.

The air filter of the present invention can be compounded with another air-permeable sheet, thereby being able to improve performance such as dust collection properties, processing suitability such as pleating processability, practical characteristics such as durability, and the like. For example, paper, a wet-process nonwoven fabric, a dry-process nonwoven fabric, a spun bond fabric, a melt-blow fabric, a plastic net, a perforated film, a woven fabric, a knitted fabric or the like can be appropriately selected within the range of the spirit of the present invention.

The air-permeable sheet to be compounded may be integrated by means of an adhesive, slight needle punching or the like in a separated process, or may be introduced as any one of a surface layer, a back layer and an inner layer in a fiber laminating process, and heated in a heat oven to integrate all at once.

Further, it is also possible to apply dot-like resin blocks onto the lower layer side or to laminate it with an embossed material to prevent adjacent pleats from coming into contact with each other.

Furthermore, it is also possible to apply a water repellent finish to the fluid inflow side layer of the filter or the whole, or to impart a flame proof finish, as needed. The application of water repellent finish can prevent an increase in pressure loss at the time when the filter material get wet by muddy water or rain.

On the pleated nonwoven fabric air filter for an internal combustion engine of the present invention, a frame can be formed by injection molding of various resins, or fixedly adhered with a urethane resin.

In order to improve pleating suitability and/or in order to prevent deformation caused by air pressure as the air filter for an internal combustion engine, the air filter may be treated, for example, with a thermosetting resin such as a phenolic or melamine-based resin, a self-crosslinkable resin such as a polyacrylic ester resin, or the like, within the range in which the operation and effect of the present invention are not inhibited.

### Examples

Examples of the present invention will be shown below, but the invention should not be construed as being limited thereto.

### Example 1

Five-millimeter long polyester-based conjugated binder fibers composed of a core of polyethylene terephthalate and a sheath of phthalic acid·isophthalic acid/ethylene glycol copolymer having a melting point of 150°C were blasted as raw material fibers from three blast portions positioned over a porous net conveyer to form fiber layers on the net conveyer while sucking with an air suction portion arranged under the net conveyer. At this time, the fiber layers were sequentially laminated so that large-fiber to fine-fiber layers were disposed from an upper layer side (fluid inflow side) to a lower layer side (fluid outflow side), and then, brought in a heat oven to bond the fibers by hot air, thereby preparing an integrated nonwoven fabric.

As the lower layer, the above-mentioned binder fibers of 2.2 dtex (diameter: 14.3 µm) were spun through a blast nozzle A so as to give a basis weight of 110 g/m². Similarly, as the intermediate layer, the above-mentioned binder fibers of 4.4 dtex (diameter: 20.2 µm) were spun through a blast nozzle B so as to give a basis weight of 50 g/m². Further, as the upper layer, the above-mentioned binder fibers of 11 dtex (diameter: 32 µm) were spun through a blast nozzle C so as to give a basis weight of 20 g/m².

Then, the fiber layers laminated on the net conveyer were placed in a hot-air treating apparatus, heated with hot air of 165°C for 1 minute to thermally bond fiber entanglement points for integration, and subjected to calendering treatment at a clearance of 2 mm at 60 °C, thereby preparing an air filter 1 of the present invention having a thickness of 2 mm and a basis weight of 180 g/m². The Gurley bending resistance in a lengthwise direction of this filter was 0.6 mN. The fiber thickness ratio of the upper layer and the intermediate layer was 0.63, and the fiber diameter ratio of the intermediate layer and the lower layer was 0.71.

### Example 2

Using five-millimeter long polyester fiber-based conjugated binder fibers composed of a core of polyethylene terephthalate and a sheath of phthalic acid isophthalic acid/ethylene glycol copolymer having a melting point of 150°C as raw material fibers, a heat-bonded nonwoven fabric was prepared in the same manner as with Example 1.

As the lower layer, intermediate layer and upper layer, the binder fibers of 1.5 dtex (diameter: 11.8 µm), 2.2 dtex (diameter: 14.3 µm) and 16.6 dtex (diameter: 39.4 µm) were spun so as to give basis weights of 100 g/m², 50 g/m² and 20 g/m², respectively.

The respective layers were continuously laminated, and placed in a hot-air treating apparatus, heated with hot air of 165°C for 1 minute to thermally bond fiber entanglement points for integration, and subjected to calendering treatment, thereby preparing an air filter 2 of the present invention having a thickness of 1.95 mm and a basis weight of 180 g/m². The Gurley bending resistance in a lengthwise direction of this filter was 1.3 mN. The fiber diameter ratio of the upper layer and the intermediate layer was 0.36, and the fiber diameter ratio of the intermediate layer and the lower layer was 0.83.

### Example 3

A nonwoven fabric was prepared in the same manner as with Examples 1 and 2.

As the lowest layer, the polyester binder fibers of 1.7 dtex (diameter: 12.4 µm) were spun so as to give a basis weight of 95 g/m². Similarly, as the lower layer, the polyester binder fibers of 4.4 dtex (diameter : 20.2 µm) were spun so as to give a basis weight of 95 g/m², and further, as the intermediate layer, the polyester binder fibers of 6.6 dtex (diameter : 24.8 µm) to a basis weight of 30 g/m². Furthermore, as the upper layer, the polyester binder fibers of 11 dtex (diameter : 32. 0 µm) were spun so as to give a basis weight of 30 g/m².

This laminated product was heat treated with a hot-air treating apparatus, and adjusted in thickness with a calender to prepare a filter 3 of the present invention having a thickness of 2.4 mm and a basis weight of 250 g/m². The Gurley bending resistance in a lengthwise direction of this filter was 4.2 mN, and the lengthwise and crosswise dimensional shrinkage factors were 0.3%. The fiber diameter ratio of the upper layer and the intermediate layer was 0.78, the fiber diameter ratio of the intermediate layer and the lower layer was 0.81, and the fiber diameter ratio of the lower layer and the lowest layer was 0.61.

### Example 4

A nonwoven fabric was prepared in the same manner as with Examples 1, 2 and 3.

As the lowest layer, the polyester binder fibers of 1.7 dtex (diameter : 12.4 µm) were spun so as to give a basis weight of 95 g/m². Similarly, as the lower layer, the polyester binder fibers of 4.4 dtex (diameter : 20.2 µm) were spun so as to give a basis weight of 95 g/m², and further, as the intermediate layer, the polyester binder fibers of 6.6 dtex (diameter : 24.8 µm) to a basis weight of 70 g/m². Furthermore, as the upper layer, the polyester binder fibers of 11 dtex (diameter: 32.0 µm) were spun so as to give a basis weight of 40 g/m².

This laminated product was heat treated with a hot-air treating apparatus, and adjusted in thickness with a calender to prepare a filter 4 of the present invention having a thickness of 2.9 mm and a basis weight of 300 g/m². The Gurley bending resistance in a lengthwise direction of this filter was 5.5 mN, and the lengthwise and crosswise dimensional shrinkage factors were 0.3%.

With respect to some of these Examples and Comparative Examples, comparative tests were made for dust holding capacity (D.H.C.) using JIS No8 dust and the like, after heat treatment (after thermal changes). The results thereof are shown in Table 1. Comparative Example 1 is a commercially available air cleaner for Toyota automobiles (a needle-punched, resin-treated dry-process nonwoven fabric type), and Comparative Example 2 is a commercially available air cleaner for Nissan automobiles (a thermosetting resin-treated filter paper type).

As for values in a state before heat treatment and the results of performance tests, Examples 1 to 4 and Comparative Example 3 are shown in Table 2. Comparative Example 3 is a commercially available air cleaner for Toyota automobiles (a needle-punched, resin-treated dry-process nonwoven fabric type), and for a type of automobile different from Comparative Example 1.

Conditions and the like relating to the respective items are shown in Table 3.

**Table 1**

| | Example 1 | Example 2 | Comparative Example 1 | Comparative Example 2 |
|---|---|---|---|---|
| Basis Weight (g/m²) | 178 | 179 | 260 | 174 |
| Thickness (mm) | 2.0 | 2.7 | 3.75 | 0.85 |
| Apparent Density (g/cc) | 0.089 | 0.065 | 0.104 | 0.205 |
| Air Permeability (cm/s) | 132.4 | 53.4 | 56.3 | 40.29 |
| Initial Pressure Loss (Pa) | 40.3 | 80.5 | 78.4 | 120 |
| D.H.C. (g/m²) <Note 1> | 926 | 1292 | 742 | 223 |
| Collection Efficiency (%) <Note 2> | 99.83 | 99.98 | 99.72 | 99.82 |
| Thickness Expansion Factor (%) | 0.0 | 38.5 | 0.0 | 0.0 |
| Rate of Dimensional Changes (%): Lengthwise × Crosswise | 0.03 × 0.01 | 0.07 × 0.23 | 0.31 × 0.74 | 0.02 × 0.01 |
| Hardness (mN) | 0.6 | 1.3 | 0.7 | 1.9 |
| Pleat Characteristics | Good | Good | Good | Good |

**Table 2**

| | Example 1 | Example 2 | Example 3 | Example 4 | Comparative Example 3 |
|---|---|---|---|---|---|
| Upper Layer Fiber diameter (µm) | 32 | 39.4 | 32.0 | 32.0 | |
| Intermediate Layer Fiber diameter (µm) | 20.2 | 14.3 | 24.8 | 24.8 | |
| Lower Layer Fiber diameter (µm) | 14.3 | 11.8 | 20.2 | 20.2 | |
| Lowest Layer Fiber diameter (µm) | - | - | 12.4 | 12.4 | |
| Fiber diameter Ratio-1 <Note 7> | 0.63 | 0.36 | 0.78 | 0.78 | |
| Fiber diameter Ratio-2 <Note 7> | 0.71 | 0.83 | 0.81 | 0.81 | |
| Fiber diameter <Note 7> | - | - | 0.61 | 0.61 | |
| Basis Weight (g/m²) | 172 | 171 | 250 | 300 | 292 |
| Thickness (mm) | 2.05 | 1.85 | 2.4 | 2.9 | 3.55 |
| Apparent Density (g/cc) | 0.084 | 0.092 | 0.104 | 0.103 | 0.082 |
| void Volume Index | 1.93 | 1.73 | 2.22 | 2.68 | 3.34 |
| D.H.C. (g/m²) <Note 3> | 877 | 693 | 1038 | 1421 | 1363 |
| Collection Efficiency (%) <Note 4> | 99.84 | 99.89 | 99.85 | 99.94 | 99.94 |
| C.H.C. (g/m²) <Note 5> | 7 | 5 | 9 | 7 | 3 |
| Collection Efficiency (%) <Note 6> | 74.4 | 82.1 | 75.81 | 72.00 | 53.85 |
| <Notes 1 and 2> JIS No8 dust was used. Unit test at a speed of 25 cm/sec and ΔP=490 Pa. | | | | | |
| <Notes 3 and 4> JIS No8 dust was used. Unit test at a speed of 50 cm/sec and ΔP=980 Pa. | | | | | |
| <Notes 5 and 6> gas oil-burnt powder was used. Unit test at a speed of 50 cm/sec and ΔP=980 Pa. | | | | | |
| <Note 7> The ratio of the fiber diameter of the fluid outflow side fiber layer/the fiber t diameter of the fluid inflow side between the respective fiber layers. | | | | | |

**Table 3**

| | |
|---|---|
| Apparent Density (g/cc) | The basis weight divided by the thickness. |
| Air Permeability (cm/sec) | According to the KES method. |
| Initial Pressure Loss (Pa) | Pressure loss between before and after a filter before loaded with dust. |
| D.H.C. (g/m²) | The amount of dust collected by a filter until the filter is loaded with the dust to reach a constant pressure loss. The higher this value is, the longer in life the filter material can be said to be. However, the filter material low in collection efficiency is high in DHC, so that the filter high in both collection efficiency and DHC can be said to be an excellent filter material. |
| Collection Efficiency (%) | When leakage of dust from a filter at a constant pressure loss is taken as A (g) and the amount of dust adhered to the filter material is taken as B (g), A/ (A+B) is the leak rate, and the collection efficiency is represented by 1-the leak rate = 1-A/(A+B). |
| Dust Conditions Used in Filter Performance Test 6 | (1) JIS No8 dust; dust concentration: g/m³ (2) gas-oil burnt; dust concentration: 0.12 g/m³ |
| Thickness Expansion Factor (%) | This means the thickness ratio of a filter material before and after standing in a dry oven at 100°C for 300 hours. |
| Rate of Dimensional Changes (%): | The rate of lengthwise and crosswise dimensional changes of a filter material before and after standing in a dry oven at 100°C for 300 hours (the lengthwise direction is a longitudinal direction of a nonwoven fabric). |
| Hardness (mN) | The lengthwise direction of a filter material is measured by JIS L1096, the Gurley method. |
| Pleat Characteristics | When a load of 1 Kg is placed on a pleat unit of 54 pleats of 25 mm high × 150 mm wide × 250 mm long, one which does not deform is judged as good. |
| Void Volume Index (L×ε) | Void volume = thickness L (mm) of a filter material × apparent void ratio ε of the filter material, with the proviso that the apparent void ratio ε of the filter material = 1 - apparent density of the filter material/ specific gravity of fibers. |

According to Table 1, Example 1 of the present invention decreases about 30% in basis weight of the filter and about 50% in thickness, compared to Comparative Example 1, but high in collection efficiency and increases about 25% in D.H.C. This means that filter exchange due to clogging, that is to say, the life is prolonged 25%. Further, pressure loss is also low, which is considered to give the effect that a load to an engine is also reduced. In Comparative Example 1, traces of needle punches are observed, so that this is considered to be responsible for poor performance. Furthermore, the filter material of Example 2 has a high thickness expansion factor. However, when it is used taking thickness return into consideration in pleating it, it can be sufficiently used as an air cleaner for automobiles.

Comparative Example 2 is a type having no density gradient, so that D.H.C. is about half or less that of Examples 1 and 2 and Comparative Example 1. Accordingly, when comparative example 2 is used as an air cleaner for automobiles, it becomes necessary to be pleated so as to give a filtration area twice or more that of Examples and Comparative Example 1.

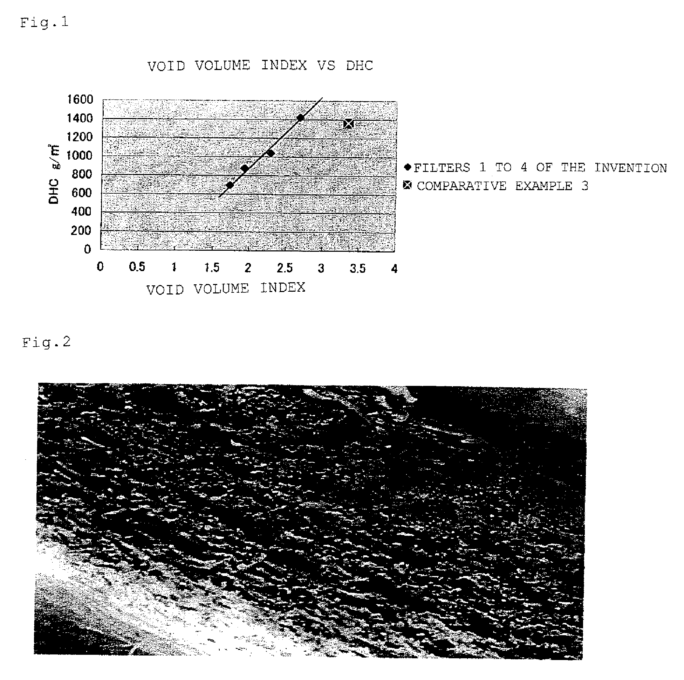

Further, a comparison of a corresponding relation between the void volume index and DHC of Table 2 is shown in Fig. 1.

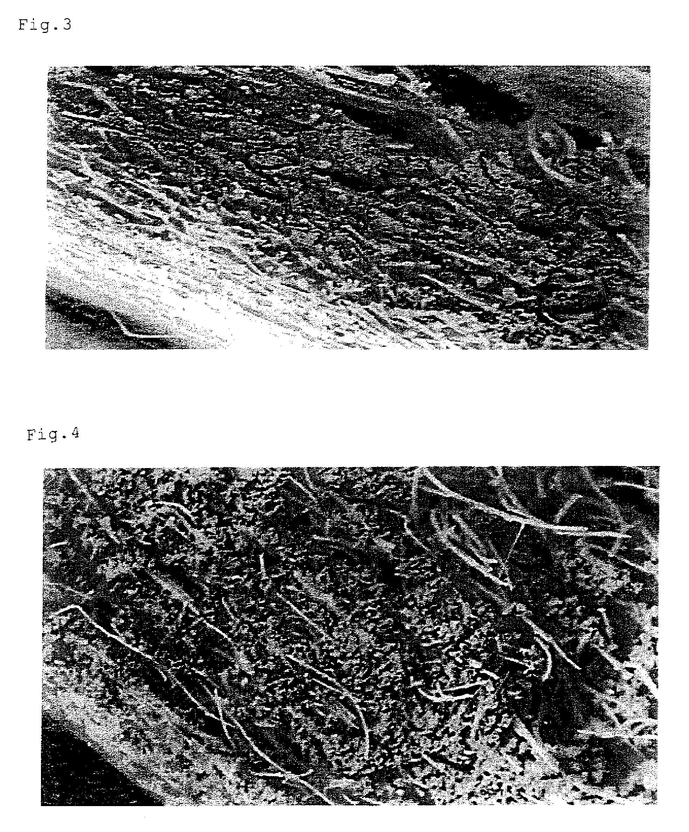

Fig. 1 evidently shows that the filter of the present invention indicates high DHC compared to that of Comparative Example 3 which is commercially available, although DHC tends to increase with an increase in void volume. Further, Figs. 2 to 4 show entering states of dust after DHC tests of Examples 3 and 4 and Comparative Example 3. Figs. 2 to 4 are all photomicrographs (magnification: 25) of filter cross sections. In the filter of Comparative Example 3 (Fig. 4), dust enters to a dust outflow side (the left side of the photograph). In contrast, dust outflow sides of Example 3 (Fig. 2) and Example 4 (Fig. 3) are white, which indicates that no dust enters.

From Table 2, as for the fiber diameter ratio of the respective fibers, the filter of Example 1 has a fiber diameter ratio-1 of 0.63 and a fiber diameter ratio-2 of 0.71, which are within the range of 0.4 to 0.8. This is therefore said to be a filter material which can cope with fine dust such as fine carbon particles. However, the filter of Example 2 is long in life for general dust, but it is considered that dust is not partially collected on the upstream side and directly clog the fiber layer on the lower layer side for a carbon body having many particles of 1 µm or less, which results in short life, because the fiber diameter ratio-1 is less than 0.4. That is to say, the filter of Example 2 is useful as a filter suitable for automobiles in a district in which sand dust is rich, rather than for automobiles in an urban area in which fine-sized dust is rich.

Further, the test results by the gas oil-burnt dust in Examples 1, 3 and 4 and Comparative Example 3 are shown in Table 2, and it is apparent that the life of the filters of the present invention is twice or more to fine carbon particles which are a main component of the gas oil-burnt dust.

Furthermore, in Examples 1, 2, 3 and 4, the respective layers are composed of the binder fibers, so that there is no environmental pollution due to free formalin or the like even at any time of producing the air filter, pleating and further actually using it as the engine filter. In addition, the pleat characteristics are found to be also good, as seen in Table 1.

### Industrial Applicability

The nonwoven fabric air filter for an internal combustion engine of the present invention induces no environmental pollution, has no needle traces, is high in dust collection efficiency, has long life, is thin, and has increased uniformity, and is useful for applications of a cabin, a canister, a filter for building conditioning, and the like, as well as the nonwoven air filter for an internal combustion engine of an automobile or another vehicle.

## Claims

1. A nonwoven fabric air filter for an internal combustion engine with a pleated form which comprises an air-laid nonwoven fabric obtained by forming a plurality of layers mainly composed of polyester-based binder fibers having a fiber length of 1 to 10 mm by an air-laid nonwoven fabric production process and performing heat adhesion, wherein an upper layer side (fluid inflow side) comprises large fibers, a lower layer side (fluid outflow side) comprises fine fibers, a final fluid outflow side comprises 100% of the polyester-based binder fibers, the basis weight (METSUKE) is from 100 to 350 g/m², the apparent density is from 0.04 g/cm³ to 0.3 g/cm³, and the dry-heat shrinkage factor after 300 hours at 100°C is 3% or less.

2. The nonwoven fabric air filter for an internal combustion engine according to claim 1, which has a fiber diameter of 20 to 45 µm and a basis weight of 10 to 75 g/m² in the large-fiber layer on the upper layer side, a fiber diameter of 15 to 30 µm and a basis weight of 20 to 105 g/m² in an intermediate layer, and a fiber diameter of 7 to 20 µm and a basis weight of 70 to 170 g/m² in the fine-fiber layer on the lower layer side.

3. The nonwoven fabric air filter for an internal combustion engine according to claim 1, which has a fiber diameter of 25 to 50 µm and a basis weight of 5 to 50 g/m² in the large-fiber layer on the upper layer side, a fiber diameter of 20 to 35 µm and a basis weight of 15 to 70 g/m² in an intermediate layer, a fiber diameter of 15 to 25 µm and a basis weight of 30 to 90 g/m² in a finer-fiber layer on a lower layer side, and a fiber diameter of 7 to 20 µm and a basis weight of 50 to 140 g/m² in the fine-fiber layer of the lowest layer.

4. A nonwoven fabric air filter for an internal combustion engine, in which two or more of the air filters according to any one of claims 1 to 3 are further compounded.

5. The nonwoven fabric air filter for an internal combustion engine according to any one of claims 1 to 4, which has water repellency.

6. The nonwoven fabric air filter for an internal combustion engine according to any one of claims 1 to 5, wherein other fibers are blended with the polyester-based binder fibers in the layers other than the final fluid outflow side.

7. The nonwoven fabric air filter for an internal combustion engine according to any one of claims 1 to 6, which is compounded with another air-permeable sheet.
